# DEMANDE DE BREVET EUROPEEN

(11) **EP 2 157 016 A2**
(43) Date de publication de la demande: **24.02.2010**
(21) Numéro de dépôt: 09168282.3
(22) Date de dépôt: 20.08.2009
(51) Int. Cl.: B64D 13/00, B64D 47/00, H05K 7/20

(54) **Système de refroidissement d'équipements électriques ou électroniques d'un aéronef**

(30) Priorité: 21.08.2008 FR 0855670; 21.08.2008 FR 0855669
(71) Demandeur: Airbus Operations, 31060 Toulouse (FR)
(72) Inventeur: Murer, Yann, 31240 Saint- Jean (FR); Zeller, Augustin, 31200 Toulouse (FR)
(74) Mandataire: den Braber, Gerard Paul

(57) **Abrégé**

Un système de refroidissement (1) pour refroidir de l'équipement électrique ou électronique (4, 5) à bord d'un aéronef est muni d'un circuit fermé principal (2). Dans le circuit fermé principal (2), une pompe (9) fait circuler un médium caloporteur. Un échangeur thermique principal (3) est couplé thermiquement avec le médium caloporteur. Un échangeur thermique secondaire (6) permet un couplage thermique direct du médium caloporteur à l'air se situant à l'extérieur de l'aéronef. Une valve de dérivation (7) en amont de l'échangeur thermique secondaire (6) permet de bloquer de façon au moins partielle la circulation du médium caloporteur vers l'échangeur thermique secondaire (6). Un conduit de dérivation (8) relie la valve de dérivation (7) à un point du circuit fermé principal (2) en aval de l'échangeur thermique secondaire (6), pour détourner au moins partiellement le médium caloporteur vers l'échangeur thermique principal (3) en fonction d'un réglage de la valve de dérivation (7).

## Description

### DOMAINE TECHNIQUE DE L'INVENTION

La présente invention se rapporte à un système de refroidissement pour refroidir de l'équipement électrique ou électronique à bord d'un aéronef. L'invention se rapporte également à un aéronef comportant un tel système.

### ÉTAT DE LA TECHNIQUE ANTÉRIEURE

Un aéronef, tel qu'un avion de transport commercial moderne, comporte différents équipements électriques et électroniques destinés à son fonctionnement, dont notamment des équipements électroniques employés dans les systèmes avioniques et des équipements électriques généraux. Ces équipements sont généralement regroupés dans des soutes et des armoires situées à différents endroits dans la structure de l'aéronef. Ces soutes et ces armoires sont généralement munies de systèmes de refroidissement, notamment de systèmes de refroidissement par air soufflé, qui permettent d'en contrôler la température intérieure et ce, afin d'éviter que les équipements électriques et électroniques qui y sont regroupés ne surchauffent.

Toutefois, en raison (i) de l'augmentation de la densité de puissance des nouveaux équipements électriques et électroniques utilisés dans les avions commerciaux modernes ou qui sont destinés à équiper les avions commerciaux en cours de développement, (ii) de l'augmentation du nombre de composants des équipements électriques et électroniques à être refroidis, et (iii) du fait que ces équipements sont de plus en plus densément regroupés, les équipements électriques et électroniques des avions commerciaux dégagent de plus en plus de chaleur et la température de l'atmosphère des soutes et des armoires dans lesquelles ils sont regroupés tend à augmenter de façon significative. Inversement, les nouveaux équipements électriques et électroniques développés pour l'aviation commerciale, et notamment les équipements électroniques des systèmes avioniques, requièrent de plus en plus d'être opérés à des températures bien contrôlées.

Sans système de refroidissement approprié, la température ambiante des soutes et des armoires dans lesquelles les équipements électriques ou électroniques sont regroupés peut donc s'élever au dessus d'une température maximale à laquelle ces équipements peuvent être opérés. Il peut alors en résulter : un mauvais fonctionnement de ces équipements, une diminution de leur durée de vie utile, leur défaillance ou leur endommagement définitif. Une telle situation est critique lorsqu'il est question d'équipements électriques et électroniques utilisés dans le fonctionnement d'un aéronef tel un avion de transport commercial.

Les systèmes de refroidissement à air soufflé employés jusqu'à maintenant dans l'aviation commerciale ne permettront plus de refroidir de façon appropriée les équipements électriques et électroniques des avions commerciaux futurs et l'adaptation des types de solutions connues, dont l'augmentation de la quantité et du débit d'air soufflé sur les composantes à refroidir, impliquent des inconvénients qui les rendent peu pratiques : (i) faible efficacité thermique, (ii) diminution de l'espace disponible dans l'aéronef, (iii) augmentation du bruit, (iv) augmentation de la consommation énergétique, et (v) risque de dommage des équipements refroidis.

Il a également été considéré de refroidir certains équipements électriques d'un aéronef militaire à l'aide d'un système de refroidissement comportant un circuit fermé dans lequel circule un médium caloporteur liquide lui-même refroidi par un système de réfrigération autonome. De tels systèmes pourraient offrir de meilleures performances que les systèmes à air soufflé connus. Le Rapport d'information aérospatiale intitulé « Liquid Cooling Systems » émis par l'organisation Society of Automotive Engineers Inc. (SAE) en septembre 1985, tel que révisé en octobre 1997 et octobre 2003 (ci-après, le « Rapport SAE »), comporte un sommaire de certains systèmes employant un circuit fermé dans lequel circule un médium caloporteur liquide pouvant être employés dans des aéronefs à usage militaire. Toutefois, les contraintes de développement des aéronefs à usage militaire étant différentes des contraintes de développement des aéronefs commerciaux, les systèmes décrits dans le « Rapport SAE » ne sont pas optimales pour les aéronefs commerciaux.

La demande de brevet allemand publiée sous le numéro DE 10 2006 059418 A1 décrit un système de refroidissement pour un aéronef comprenant deux circuits de refroidissement distincts : un premier circuit de refroidissement pour refroidir un premier dispositif électronique et un second circuit de refroidissement pour refroidir un second dispositif électronique, qui est redondant par rapport au premier dispositif électronique. Dans le cas où le premier circuit de refroidissement est défectueux, un troisième circuit de refroidissement assure le refroidissement du premier dispositif électronique. Dans ce cas, le second dispositif électronique est refroidi au moyen du second et troisième circuit de refroidissement.

### EXPOSÉ DE L'INVENTION

Il existe un besoin pour un système de refroidissement permettant un refroidissement efficace au niveau énergétique, ce qui se traduit par une économie d'énergie, tout en évitant que le système subisse une surcharge de travail.

Selon un aspect de l'invention, un système de refroidissement pour refroidir de l'équipement électrique ou électronique à bord d'un aéronef est muni d'un circuit fermé principal comprenant :
- une pompe pour faire circuler un médium caloporteur dans le circuit fermé principal ;
- un échangeur thermique principal couplé thermiquement avec le médium caloporteur ;
- un échangeur thermique secondaire permettant un couplage thermique direct du médium caloporteur à l'air se situant à l'extérieur de l'aéronef ;
et **caractérisé en ce que** le système de refroidissement comprend :
- une valve de dérivation en amont de l'échangeur thermique secondaire permettant de bloquer de façon au moins partielle la circulation du médium caloporteur vers l'échangeur thermique secondaire; et
- un conduit de dérivation reliant la valve de dérivation à un point du circuit fermé principal en aval de l'échangeur thermique secondaire pour détourner au moins partiellement le médium caloporteur vers l'échangeur thermique principal en fonction d'un réglage de la valve de dérivation.

Un tel système permet d'obtenir un rendement énergétique relativement élevé en ayant recours à l'air ambiant externe afin de refroidir le médium caloporteur circulant dans le circuit fermé principal. Le système permet en outre d'assurer un refroidissement convenable dans le cas d'un disfonctionnement de l'échangeur thermique principal.

Dans un mode de réalisation particulier, le circuit fermé principal est adapté pour refroidir :
- un premier compartiment comprenant des systèmes avioniques de l'aéronef ; et
- un second compartiment comprenant des équipements électriques de l'aéronef.

Dans un autre mode de réalisation, le premier compartiment et le second compartiment sont placés en série dans le circuit de refroidissement fermé principal.

Une tel mode de réalisation contribue, entre autre, à obtenir un bon rendement énergétique, par exemple dans le cas où la température de fonctionnement des équipements du premier compartiment est inférieure à la température de fonctionnement des équipements du second compartiment.

Dans un autre mode de réalisation particulier, le système comprend un contrôleur de valve adapté pour varier le réglage de la valve de dérivation en fonction d'au moins une condition d'opération de l'aéronef.

Dans un autre mode de réalisation particulier, le contrôleur de valve est adapté pour varier le réglage de la valve de dérivation en fonction d'une température extérieure.

Dans un autre mode de réalisation particulier, le système comprend un contrôleur de pompe adapté pour contrôler la pompe de sorte que le médium caloporteur circule dans le circuit fermé principal avec un débit qui varie en fonction d'une chaleur dégagée par l'équipement électrique ou électronique.

Dans un autre mode de réalisation particulier, le système comprend :
- un second circuit de refroidissement fermé fluidiquement indépendant du circuit fermé principal, le second circuit de refroidissement fermé comprenant :
   - au moins un compresseur adapté à faire circuler un fluide caloporteur dans le second circuit de refroidissement fermé ; et
   - un échangeur thermique adapté à refroidir le fluide caloporteur circulant dans le second circuit de refroidissement fermé au moyen d'air ambiant externe ;
l'échangeur thermique principal du circuit fermé principal étant adapté à transmettre la chaleur du liquide caloporteur du circuit fermé principal au fluide caloporteur du second circuit de refroidissement fermé par l'évaporation du fluide caloporteur circulant dans le second circuit de refroidissement fermé ; et
l'échangeur thermique du second circuit de refroidissement fermé permettant la condensation du fluide caloporteur circulant dans le second circuit de refroidissement fermé.

Dans un autre mode de réalisation particulier, le circuit fermé principal est adapté pour refroidir un troisième groupe d'équipements électriques ou électroniques comprenant des instruments de vol du poste de pilotage de l'aéronef.

Un autre aspect de l'invention concerne un aéronef comportant un système de refroidissement tel que décrit dans ce qui précède.

### DESCRIPTION DES FIGURES

La présente invention est illustrée par des exemples non limitatifs sur les figures jointes, dans lesquelles des références identiques indiquent des éléments similaires :
La Figure 1 illustre schématiquement une première réalisation possible de l'invention ; et
La Figure 2 illustre schématiquement une deuxième réalisation possible de l'invention.

### DESCRIPTION DÉTAILLÉE D'UNE RÉALISATION DE L'INVENTION

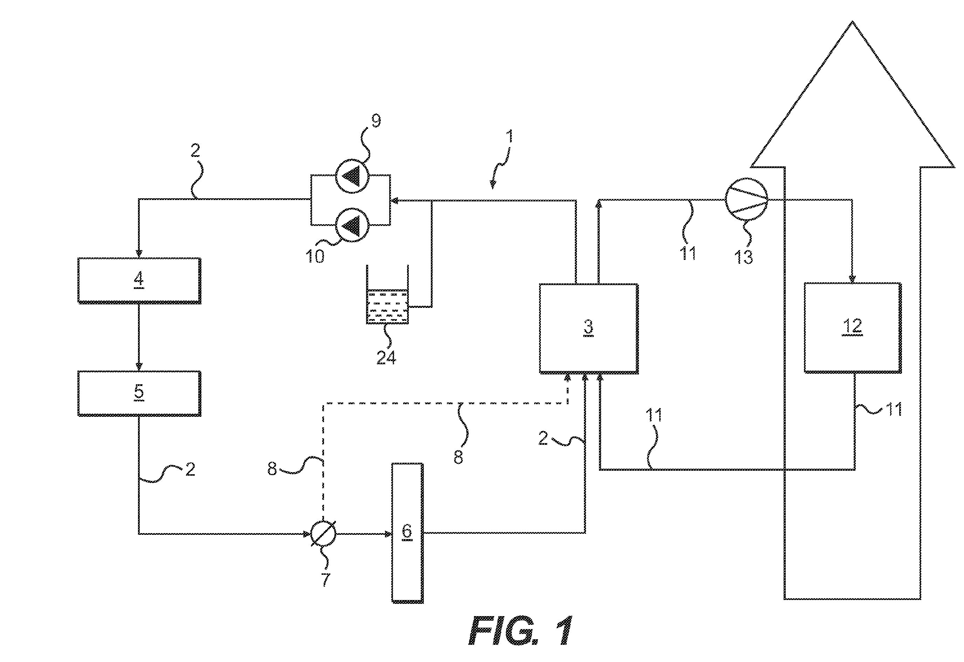

Une réalisation possible de l'invention est décrite ci-dessous en faisant référence à la Figure 1. Cette réalisation de l'invention est donnée à titre illustratif et ne doit en rien limiter la portée de l'invention. D'autres réalisations possibles de l'invention et des variations pouvant lui être apportées seront apparentes pour la personne versée dans l'art.

Le système de refroidissement d'équipements électriques ou électroniques (1) comprend un ensemble de conduits formant un circuit fermé principal (2) dans lequel circule un médium caloporteur. Le médium caloporteur peut être un quelconque élément ou mélange d'éléments, dans un état gazeux ou fluide, capable de transporter de la chaleur. Dans les réalisations illustratives représentées aux Figures 1 à 2, le médium caloporteur est un liquide, comme par exemple un liquide à base d'eau, tel qu'un mélange eau et glycol ou eau et méthanol. Les conduits relient entre eux les différents éléments du circuit. Un échangeur thermique principal (3) couplé thermiquement avec le médium caloporteur liquide est utilisé pour refroidir ce dernier à une température se situant approximativement entre 10°C et 15°C. Le médium caloporteur liquide circule dans un sens indiqué par les flèches de la Figure 1.

Le système permet de refroidir au moins un premier groupe d'équipements électriques ou électroniques (4) et un second groupe d'équipements électriques ou électroniques (5). Dans cette réalisation illustrative de l'invention, le premier groupe d'équipements électriques ou électroniques (4) comprend des équipements électroniques des systèmes avioniques d'un avion de transport commercial qui peuvent par exemple être regroupés entre eux selon des besoins thermiques similaires dans une première portion de l'aéronef, telle que, par exemple dans une baie ou dans un compartiment. De façon générale, on retrouve parmi ceux-ci les équipements électroniques associés aux systèmes d'instrumentation aéronautique et de communication de l'avion, dont notamment, à titre illustratif, des ordinateurs de bord, des microprocesseurs et calculateurs, des contrôleurs, des dispositifs d'affichage et écrans, des sondes et antennes, etc. D'autre part, le second groupe d'équipements électriques ou électroniques (5) comprend des composantes électriques ou électromécaniques plus généralement associées au fonctionnement de l'avion, dont notamment, toujours à titre illustratif, des centres de distribution électrique, des convertisseurs, des unités de rectification, des disjoncteurs, des actionneurs, des pompes électriques, etc. Les équipements du second groupe d'équipements électriques ou électroniques (5) peuvent par exemple être regroupés entre eux selon des besoins thermiques similaires dans une seconde portion de l'aéronef telle que, par exemple, dans une baie ou dans un compartiment.

Les équipements électriques ou électroniques des deux groupes (4, 5) sont refroidis par l'intermédiaire d'un échangeur thermique (non-illustré) qui permet de les coupler thermiquement avec le médium caloporteur liquide. La personne versée dans l'art connaît plusieurs méthodes pour coupler un équipement dégageant de la chaleur à un médium caloporteur liquide. Dans une réalisation de l'invention, cet échangeur thermique peut être constitué d'un réseau de serpentins placé à proximité des équipements électriques ou électroniques à refroidir ou d'une structure thermiquement conductrice à laquelle sont thermiquement reliés ces équipements à refroidir et dans laquelle circule le médium caloporteur liquide.

Dans la réalisation de l'invention illustrée à la Figure 1, le premier et le second groupe d'équipements électriques ou électroniques (4, 5) sont placés en série. Dans cette réalisation de l'invention où le premier groupe d'équipements électriques ou électroniques (4) comprend les équipements électroniques des systèmes avioniques de l'avion et le second groupe d'équipements électriques ou électroniques (5) comprend les équipements électriques et électromécaniques associés au fonctionnement de l'avion, une telle disposition en série permet un rendement optimal du système puisque les équipements du premier groupe (4) nécessitent d'être maintenus à une température plus basse que ceux du deuxième groupe (5). La température du médium caloporteur liquide utilisée pour refroidir les équipements du premier groupe (4) peut donc se situer entre approximativement 10°C et 15°C. Une fois chargé de la chaleur dégagée par les équipements du premier groupe (4), le médium caloporteur liquide peut être directement dirigé vers les équipements du second groupe (5) à une température approximative de 40°C, laquelle est appropriée pour permettre de refroidir les équipements de ce second groupe (5).

La réalisation de l'invention illustrée à la Figure 1 comporte également un échangeur thermique secondaire (6) faisant intégralement partie du circuit fermé principal (2). Cet échangeur thermique secondaire (6) prend la forme d'un échangeur de peau qui permet de coupler thermiquement le médium caloporteur liquide circulant dans le circuit fermé principal (2) directement à l'air se situant à l'extérieur de l'avion. Cette réalisation de l'invention permet de refroidir le médium caloporteur liquide circulant dans le circuit fermé principal (2) de façon énergétiquement plus efficace et peut permettre d'obtenir un rendement de refroidissement adéquat pour les fins de la présente invention lorsque l'avion est en altitude ou lorsque les groupes d'équipements électriques ou électroniques (4, 5) sont opérés alors que l'avion est au sol par temps froid. Le recours à un tel échangeur thermique secondaire (6) peut donc permettre d'économiser l'énergie requise pour refroidir le médium caloporteur liquide par le biais de l'échangeur thermique principal (3).

Lorsque l'appareil est au sol, un échange thermique entre l'air à l'extérieur de l'avion et le médium caloporteur liquide circulant dans le circuit fermé principal (2) n'est toutefois pas souhaitable et pourrait imposer une surcharge de travail à l'échangeur thermique principal (3). Une valve de dérivation (7) située avant l'échangeur thermique secondaire (6) permet donc de détourner complètement ou partiellement le médium caloporteur liquide circulant dans le circuit fermé principal (2) directement vers l'échangeur thermique principal (3), au moyen d'un conduit de dérivation (8). Le positionnement de la valve et donc la quantité de médium caloporteur liquide détournée peut varier en fonction de la température à l'extérieur de l'avion et de la température à laquelle les groupes d'équipements électriques et électroniques (4, 5) doivent être maintenus. Le système de refroidissement comprend donc de préférence un contrôleur de valve adapté pour varier un réglage de la valve de dérivation (7) en fonction d'au moins une condition d'opération de l'aéronef comme, par exemple, une température extérieure, qui peut être mesurée par une sonde.

Un système de poussée, dans cette réalisation une pompe (9) adaptée à ce type de fonction et dont le choix particulier de modèle apparaîtra à la personne versée dans l'art, permet de faire circuler le médium caloporteur liquide dans le circuit fermé principal (2). Cette pompe (9) est munie d'un système de contrôle (non-illustré) qui permet d'en ajuster le débit en fonction du niveau de refroidissement des équipements électriques ou électroniques (4, 5) recherché. Plus le débit de la pompe (9) sera grand, plus le courant du médium caloporteur liquide dans le circuit fermé principal (2) sera élevé. Le système de contrôle du débit de la pompe est automatisé. Il est relié à un ou plusieurs capteurs (non-illustrés) prenant la température du médium caloporteur liquide à différents endroits clés dans le circuit fermé principal (2), dont, pour exemple, immédiatement avant et après le premier groupe d'équipements électriques ou électroniques (4), immédiatement avant et après le second groupe d'équipements électriques ou électroniques (5), et immédiatement avant et après l'échangeur thermique principal (3).

Une pompe auxiliaire (10) est placée en parallèle à la pompe (9) de façon à pouvoir prendre le relais et de remplir les mêmes fonctions que la pompe (9) si elle venait à ne plus fonctionner de façon adéquate.

Un réservoir de liquide caloporteur (24) permet de compenser les variations de volume du médium caloporteur liquide dans le circuit fermé principal (2) en raison de changements de température auxquels il peut être soumis ou en raison de fuites.

Des capteurs (non-illustrés) peuvent être installés à différents endroits dans le circuit fermé principal (2) afin de permettre de mesurer la pression et la vélocité du médium caloporteur liquide qui y circule à tout moment lorsque le système de refroidissement (1) est en fonction. Cette donnée pourrait notamment permettre de détecter toute fuite dans le circuit fermé principal (2) avant que les groupes d'équipements électriques ou électroniques (4, 5) ne soient soumis à une température trop élevée pour leur fonctionnement optimal.

Le médium caloporteur liquide circulant dans le circuit fermé principal (2) peut en tout temps être refroidi par l'échangeur thermique principal (3). Dans cette réalisation de l'invention, l'échangeur thermique principal (3) est un évaporateur qui permet de coupler thermiquement le médium caloporteur liquide circulant dans le circuit fermé principal (2) à un fluide caloporteur circulant dans un circuit fermé principal (11).

Un second échangeur thermique (12) est également couplé thermiquement avec le fluide caloporteur circulant dans le second circuit de refroidissement fermé indépendant (11). Ce second échangeur thermique (12) est un condensateur refroidi par un système à air poussé conventionnel bien connu par la personne versée dans l'art, par exemple un *ram air* en anglais (système à air dynamique en français). L'air utilisé pour refroidir le second échangeur thermique (12) peut notamment provenir de l'extérieur de l'avion et être dirigé vers le second échangeur thermique (12) par un système de ventilation approprié.

Le cycle de refroidissement du second circuit de refroidissement fermé indépendant (11) est essentiellement le suivant : l'échangeur thermique principal (3) permet de transmettre la chaleur emmagasinée par le médium caloporteur liquide circulant dans le circuit fermé principal (2) au fluide caloporteur du second circuit de refroidissement fermé indépendant (11), lequel est alors évaporé à son état gazeux. Ce fluide caloporteur à l'état gazeux est acheminé au second échangeur thermique (12) qui permet à son tour de transmettre la chaleur emmagasinée par ce fluide caloporteur à l'air utilisé pour refroidir le second échangeur thermique (12). Le fluide caloporteur refroidi est alors condensé en son état liquide est réacheminé vers l'échangeur thermique principal (3) pour y être chauffé à nouveau.

Un système de poussée et de compression, tel un compresseur (13), permet au fluide caloporteur à l'état gazeux de circuler de l'échangeur thermique principal (3) vers le second échangeur thermique principal (12).

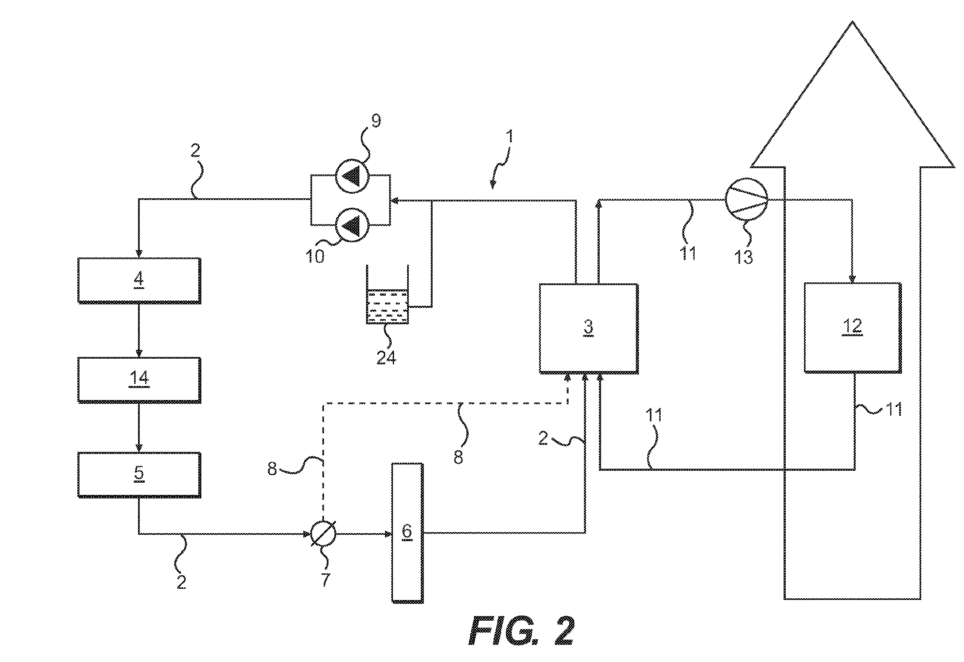

Une autre réalisation possible de l'invention est décrite ci-dessous en faisant référence à la Figure 2. Le système et similaire à celui décrit ci-dessus, à l'exception que le système permet de refroidir un premier groupe d'équipements électriques ou électroniques (4), un second groupe d'équipements électriques ou électroniques (5), et un troisième groupe d'équipements électriques ou électroniques (14), les groupes étant placés en série.

Dans cette réalisation de l'invention, le premier groupe d'équipements électriques ou électroniques (4) comprend des équipements électroniques des systèmes avioniques, le second groupe d'équipements électriques ou électroniques (5) comprend des composantes électriques ou électromécaniques plus généralement associées au fonctionnement de l'avion et le troisième groupe d'équipements électriques ou électroniques (14) comprend des instruments du vol du poste de pilotage de l'aéronef.

Les figures et leurs descriptions faites ci-dessus illustrent l'invention plutôt qu'elles ne la limitent. Naturellement, pour satisfaire des besoins spécifiques, une personne compétente dans le domaine de l'invention pourra appliquer des modifications dans la description précédente.

Les signes de référence dans les revendications n'ont aucun caractère limitatif. Les verbes "comprendre" et "comporter" n'excluent pas la présence d'autres éléments que ceux listés dans les revendications. Le mot "un" précédant un élément n'exclut pas la présence d'une pluralité de tels éléments.

## Revendications

1. Système de refroidissement (1) pour refroidir de l'équipement électrique ou électronique (4, 5) à bord d'un aéronef, le système de refroidissement comprenant un circuit fermé principal (2) comprenant :
- une pompe (9) pour faire circuler un médium caloporteur dans le circuit fermé principal (2);
- un échangeur thermique principal (3) couplé thermiquement avec le médium caloporteur ;
- un échangeur thermique secondaire (6) permettant un couplage thermique direct du médium caloporteur à l'air se situant à l'extérieur de l'aéronef;
**caractérisé en ce que** le système de refroidissement comprend :
- une valve de dérivation (7) en amont de l'échangeur thermique secondaire (6) permettant de bloquer de façon au moins partielle la circulation du médium caloporteur vers l'échangeur thermique secondaire (6); et
- un conduit de dérivation (8) reliant la valve de dérivation (7) à un point du circuit fermé principal (2) en aval de l'échangeur thermique secondaire (6) pour détourner au moins partiellement le médium caloporteur vers l'échangeur thermique principal (3) en fonction d'un réglage de la valve de dérivation (7).

2. Système de refroidissement selon la revendication 1, dans lequel le circuit fermé principal (2) est adapté pour refroidir :
- un premier compartiment (4) comprenant des systèmes avioniques de l'aéronef; et
- un second compartiment (5) comprenant des équipements électriques de l'aéronef.

3. Système de refroidissement selon la revendication 2, dans lequel le premier compartiment (4) et le second compartiment (5) sont placés en série dans le circuit de refroidissement fermé principal (2).

4. Système de refroidissement selon l'une quelconque des revendications précédentes, comprenant un contrôleur de valve adapté pour varier le réglage de la valve de dérivation (7) en fonction d'au moins une condition d'opération de l'aéronef.

5. Système de refroidissement selon la revendication 4, dans lequel le contrôleur de valve est adapté pour varier le réglage de la valve de dérivation (7) en fonction d'une température extérieure.

6. Système de refroidissement selon l'une quelconque des revendications 1 à 5, comprenant un contrôleur de pompe adapté pour contrôler la pompe (9) de sorte que le médium caloporteur circule dans le circuit fermé principal (2) avec un débit qui varie en fonction d'une chaleur dégagée par l'équipement électrique ou électronique (4, 5).

7. Système de refroidissement selon l'une quelconque des revendications 1 à 6, comprenant :
- un second circuit de refroidissement fermé (11) fluidiquement indépendant du circuit fermé principal (2), le second circuit de refroidissement fermé (11) comprenant :
- au moins un compresseur (13) adapté à faire circuler un fluide caloporteur dans le second circuit de refroidissement fermé (11) ; et
- un échangeur thermique (12) adapté à refroidir le fluide caloporteur circulant dans le second circuit de refroidissement fermé (11) au moyen d'air ambiant externe ;
- l'échangeur thermique principal (3) du circuit fermé principal (2) étant adapté à transmettre la chaleur du liquide caloporteur du circuit fermé principal (2) au fluide caloporteur du second circuit de refroidissement fermé (11) par l'évaporation du fluide caloporteur circulant dans le second circuit de refroidissement fermé (11); et
- l'échangeur thermique (12) du second circuit de refroidissement fermé (11) permettant la condensation du fluide caloporteur circulant dans le second circuit de refroidissement fermé (11).

8. Système de refroidissement selon l'une quelconque des revendications 1 à 7, dans lequel le circuit fermé principal (2) est adapté pour refroidir :
- un troisième groupe d'équipements électriques ou électroniques (14) comprenant des instruments de vol du poste de pilotage de l'aéronef.

9. Aéronef comportant un système de refroidissement selon l'une quelconque des revendications 1 à 8.
